# EUROPÄISCHE PATENTSCHRIFT

(11) **EP 0 255 509 B1**
(45) Veröffentlichungstag und Bekanntmachung des Hinweises auf die Patenterteilung: **03.11.1993**
(21) Anmeldenummer: 87890170.1
(22) Anmeldetag: 13.07.1987
(51) Int. Cl.: H04R 1/02

(54) **Lautsprecherabdeckung und Verfahren zur Herstellung derselben**
Loudspeaker front and method of producing the same
Ecran pour haut-parleur et sa méthode de fabrication

(30) Priorität: 28.07.1986 AT 2024/86
(43) Veröffentlichungstag der Anmeldung: 03.02.1988
(73) Patentinhaber: ETI Beteiligungsgesellschaft m.b.H., A-1060 Wien (AT)
(72) Erfinder: Stastny, Erich, A-2521 Trumau (AT); Just, Günter, A-1230 Wien (AT)
(74) Vertreter: Brauneiss, Leo, Dipl.Ing.

(56) Entgegenhaltungen:
- DE-A- 3 431 005
- GB-A- 1 431 181
- US-A- 3 995 125
- US-A- 4 529 059

## Beschreibung

Die Erfindung betrifft eine Lautsprecherabdeckung, bestehend aus Gitteröffnungen begrenzenden Stegen aus gespritzem Kunststoffmaterial und aus einem die Gitteröffnungen abdeckenden, flächigen, schalldurchlässigen Material, beispielsweise einem Vlies, Gewebe oder Gewirke, wobei beiden Oberflächen des schalldurchlässigen Materiales benachbart Stege angeordnet sind. Ferner betrifft die Erfindung ein Verfahren zur Herstellung einer solchen Lautsprecherabdeckung.

Üblicherweise wird die Lautsprechermembrane durch ein Lautsprechergitter abgedeckt. Werden derartige Lautsprecher in einer Lage angeordnet, in welcher das Lautsprechergitter im wesentlichen horizontal verläuft, wie dies beispielsweise bei der Montage von Lautsprechern in der Heckablage von Kraftfahrzeugen der Fall ist, so besteht die Gefahr, daß Schmutzpartikel, Fremdkörper u.dgl. durch die Gitteröffnungen der Lautsprecherabdeckung in die Lautsprechermembrane fallen und dadurch zumindest eine Verzerrung der vom Lautsprecher wiedergegebenen Töne erfolgt. Spitze, durch die Gitteröffnungen hindurchfallende Gegenstände können sogar zu einer Beschädigung der Lautsprechermembrane führen.

Es ist daher bekannt, bei derartigen im wesentlichen horizontal angeordneten Lautsprechergittern an der der Membrane zugewendeten Rückseite ein schalldurchlässiges Material, beispielsweise durch Kleben, zu befestigen, welches den Schalldurchtritt ermöglicht, das Hindurchfallen von Verunreinigungen und Fremdkörpern durch die Gitteröffnungen jedoch verhindert. Dieses schalldurchlässige Material kann z.B. ein Vlies, ein Gewebe oder ein Gewirke sein, und aus Naturfasern oder Chemiefasern hergestellt sein. Bei dieser bekannten Anordnung besteht jedoch die Gefahr, daß sich, vor allem bei unsachgemäßer Anbringung, dieses schalldurchlässige Material zumindest teilweise wieder vom Gitter löst, so daß dann wieder die von diesem Material zurückgehaltenen Feststoffe in die Lautsprechermembrane fallen.

Um diesen Nachteil zu vermeiden, hat man bereits eine Lautsprecherabdeckung vorgeschlagen (DE-A-2 404 943), die aus zwei gesondert hergestellten Gittern besteht, zwischen welchen mehrere Lagen aus einem Kunststoffgeflecht eingespannt sind, wobei die Gitter mittels einer Schraube zusammengehalten werden. Nachteilig ist bei dieser bekannten Ausführungsform, daß die beiden Gitter gesondert hergestellt werden müssen und daß die Gefahr besteht, daß sich die Schraube, insbesondere infolge der auftretenden Schwingungen, löst oder zumindest lockert, so daß bei einer horizontalen Anordnung der Lautsprecherabdeckung Teile in die Lautsprechermembrane fallen können oder zumindest infolge der lockeren Verbindung störende Nebengeräusche, Resonanzerscheinungen u.dgl. auftreten.

Aus der GB-A-1 431 181 ist eine Lautsprecherabdeckung bekannt geworden, die aus einer mit Perforationen versehenen Grundplatte aus Kunststoff und einem diese Perforationen abdeckenden schalldurchlässigen Textilmaterial besteht, welches mit der Grundplatte unter Vermittlung eines Klebstoffes verbunden ist. Die Verbindung wird hiebei durch Anwendung von Druck und Wärme verbessert, wobei die auf eine Temperatur von vorzugsweise 120 bis 145° C erwärmte Grundplatte weich wird. Nachteilig ist bei dieser Ausführungsform die arbeitsaufwendige Herstellung, wobei die gewünschte gute Verbindung zwischen Grundplatte und Textilmaterial nur dann erreicht wird, wenn vorbestimmte Größen für den aufgebrachten Druck und die Erwärmungstemperatur eingehalten werden. Außerdem befindet sich auch bei dieser bekannten Lautsprecherabdeckung das Textilmaterial an der Oberfläche, sodaß die Gefahr eines Ablösens beispielsweise durch mechanische Einflüsse nicht ausgeschlossen ist. Vor allem bei Verwendung eines Vlieses als Textilmaterial ist diese Gefahr groß, da ein solches Vlies aus einzelnen wirr angeordneten Fasern besteht und die Verbindung nur mit den der Grundplatte benachbarten Fasern erfolgt.

Es ist auch eine Lautsprecherabdeckung bekannt, die aus miteinander verbundenen, die seitliche Begrenzung der Abdeckung bildenden Rahmen besteht, zwischen welchen Stoffbahnen eingespannt sind (US-A-3 674 108). Solche Stoffbahnen können jedoch leicht beschädigt werden, insbesondere dann, wenn bei Kraftfahrzeugen die Lautsprecher in der Heckablage angeordnet sind und auf diese schwere oder scharfkantige Gegenstände abgelegt werden.

Die vorliegende Erfindung hat sich zur Aufgabe gestellt, eine Lautsprecherabdeckung zu schaffen, die auf einfache Weise herstellbar ist, eine untrennbare Verbindung zwischen dem Gitter und dem schalldurchlässigen Material gewährleistet und ein Eindringen von Fremdkörpern durch die Gitteröffnungen mit Sicherheit vermeidet. Die Erfindung besteht hiebei darin, daß das von den Stegen gebildete Gitter einstückig ist, wobei die Stege des Gitters das schalldurchlässige Material zumindest an einzelnen Stellen durchdringen. Auf diese Weise erfolgt ohne zusätzliche Maßnahmen eine sichere, unlösbare Verankerung des schalldurchlässigen Materiales zwischen den Gitterstegen.

Eine derartige Lautsprecherabdeckung kann erfindungsgemäß auf einfache Weise dadurch hergestellt werden, daß eine Bahn aus einem schalldurchlässigen Material in den Formhohlraum einer Spritzgußform eingelegt wird, worauf an beiden Seiten dieser Bahn ein Kunststoffmaterial zur Bildung der Gitterstege derart angespritzt wird, daß es zumindest an einzelnen Stellen das schalldurchlässige Material durchdringt. Der Herstellungsvorgang kann hiebei auch vollautomatisch erfolgen, wobei eine weitere Bearbeitung der Lautsprecherabdeckung durch nachträgliches Anbringen von zusätzlichen Materialien, Befestigungsmitteln od.dgl. nicht erforderlich ist.

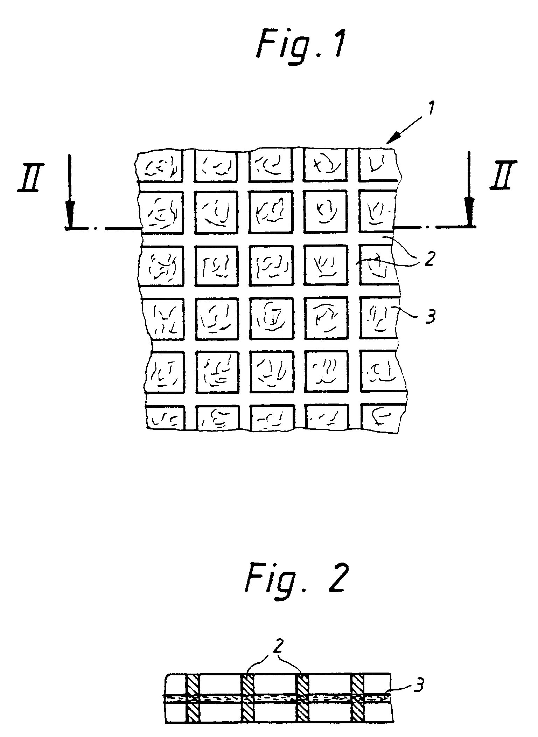

In der Zeichnung ist eine erfindungsgemäße Lautsprecherabdeckung an Hand eines Ausführungsbeispieles schematisch dargestellt. Fig.1 zeigt eine Draufsicht auf einen Teilausschnitt und Fig.2 stellt einen Schnitt nach der Linie II-II in Fig.1 dar.

Die erfindungsgemäße Lautsprecherabdeckung 1 besteht aus einem Gitter mit kreuz und quer verlaufenden Stegen 2, welche die Gitteröffnungen begrenzen. Beim dargestellten Ausführungsbeispiel ist ein einfaches Gitter mit quadratischen Gitteröffnungen gezeigt, selbstverständlich kann aber das erfindungsgemäße Lautsprechergitter jede beliebige Form, beispielsweise mit gekrümmten bzw. gebogenen Stegen, aufweisen, um ein dekoratives Aussehen zu erlangen.

Wie aus Fig.2 hervorgeht, befindet sich etwa in der Mitte der Gitterstege, parallel zur Gitteroberseite, eine Bahn 3 aus einem schalldurchlässigen Material, beispielsweise aus einem Vlies, Gewebe oder Gewirke aus Natur- und/oder Chemiefasern, welches dort, wo sich die Gitterstege 2 befinden, von dem diese Stege bildenden Kunststoffmaterial durchdrungen ist. Dadurch erfolgt eine sichere Verankerung dieses schalldurchlässigen Materiales 3 im Bereich der Gitterstege 2.

Die Herstellung einer solchen Lautsprecherabdeckung erfolgt auf einfache Weise dadurch, daß eine zweiteilige Spritzgußform mit entsprechend der Anordnung der Gitterstege verlaufenden Kanälen verwendet wird, wobei die Trennfuge der Spritzgußform etwa parallel zur Gitteroberseite in der Mitte der Kanäle angeordnet ist. Zwischen die beiden Formhälften wird eine Bahn aus dem schalldurchlässigen Material eingelegt und nach dem Schließen der Form wird in die Kanäle zu beiden Seiten der Bahn aus schalldurchlässigem Material das die Stege bildende Kunststoffmaterial derart eingespritzt, daß es die Bahn aus schalldurchlässigem Material zumindest teilweise durchdringt.

## Patentansprüche

1. Lautsprecherabdeckung, bestehend aus Gitteröffnungen begrenzenden Stegen (2) aus gespritztem Kunststoffmaterial und aus einem die Gitteröffnungen abdeckenden, flächigen, schalldurchlässigen Material (3), beispielsweise einem Vlies, Gewebe oder Gewirke, wobei beiden Oberflächen des schalldurchlässigen Materiales (3) benachbart Stege (2) angeordnet sind, dadurch gekennzeichnet, daß das von den Stegen (2) gebildete Gitter einstückig ist, wobei die Stege (2) das schalldurchlässige Material (3) zumindest an einzelnen Stellen durchdringen.

2. Verfahren zur Herstellung einer Lautsprecherabdeckung, bestehend aus Gitteröffnungen begrenzenden Stegen (2) aus gespritztem Kunststoffmaterial und aus einem die Gitteröffnungen abdeckenden, flächigen, schalldurchlässigen Material (3), beispielsweise einem Vlies, Gewebe oder Gewirke, das mit dem plastifizierten Kunststoffmaterial der Stege verbunden wird, dadurch gekennzeichnet, daß eine Bahn aus dem schalldurchlässigen Material (3) in den Formhohlraum einer Spritzgußform eingelegt wird und daß an beiden Seiten dieser Bahn ein Kunststoffmaterial zur Bildung der Gitterstege (2) derart angespritzt wird, daß es zumindest an einzelnen Stellen das schalldurchlässige Material (3) durchdringt.

## Claims

1. Loudspeaker cover, comprising webs (2) which delimit grid openings and which are of injection moulded plastics material, and comprising a sound-transmitting, planar material (3) covering the grid openings, for example of a fleece or a woven or knitted fabric, webs (2) being arranged adjacent both the surfaces of the sound-transmitting material (3), characterized in that the grid formed by the webs (2) is in one piece, the webs (2) penetrating the sound-transmitting material (3) at least at individual points.

2. Process for manufacturing a loudspeaker cover, comprising webs (2) which delimit grid openings and which are of injection moulded plastics material, and comprising a sound-transmitting, planar material (3) covering the grid openings, for example of a fleece or a woven or knitted fabric, this material being connected to the plasticized plastics material of the webs, characterized in that a length of the sound-transmitting material (3) is laid in the mould cavity of an injection mould, and that a plastics material is injected onto both sides of this length of material to form the grid webs (2) such that the plastics material penetrates the sound-transmitting material (3) at least at individual points.

## Revendications

1. Cache de haut-parleur, comportant des barreaux (2) en matière plastique moulée par injection, qui délimitent des ouvertures à la manière d'une grille, et un matériau (3) de faible épaisseur, par exemple une nappe, un tissu ou un tissu à mailles, qui laisse passer le son et recouvre les ouvertures de grille, les deux faces du matériau (3) laissant passer le son se situant au voisinage des barreaux (2), caractérisé en ce que la grille formée par les barreaux (2) est réalisée en une seule pièce, les barreaux (2) traversant au moins par endroits le matériau (3) laissant passer le son.

2. Procédé de fabrication d'un cache de haut-parleur, lequel cache est formé de barreaux (2) en matière plastique moulée par injection, délimitant des ouvertures à la manière d'une grille, et d'un matériau (3) de faible épaisseur, par exemple une nappe, un tissu ou un tissu à mailles, qui laisse passer le son et recouvre les ouvertures de grille et qui est relié à la matière plastique plastifiée formant les barreaux, caractérisé en ce que l'on place une bande du matériau (3) laissant passer le son dans la cavité d'un moule pour moulage par injection et que, pour former les barreaux (2) de grille, on moule par inj&rection une matière plastique des deux côtés de cette bande de telle façon que cette matière plastique traverse au moins par endroits le matériau (3) laissant passer le son.
